# EUROPÄISCHE PATENTSCHRIFT

(11) **EP 1 160 126 B1**
(45) Veröffentlichungstag und Bekanntmachung des Hinweises auf die Patenterteilung: **23.01.2013**
(21) Anmeldenummer: 01110302.5
(22) Anmeldetag: 26.04.2001
(51) Int. Cl.: B60Q 1/00, B60H 1/00, G06F 3/048, B60K 37/06

(54) **Verfahren und Vorrichtung zur Zuordnung von Bedienelementen, insbesondere Geräte eines Kraftfahrzeuges**
System and device for the installation of control elements particularly for motor vehicle apparatus
Procédé et dispositif d'installation d'organes de commande, en particulier pour appareils de véhicule automobile

(30) Priorität: 30.05.2000 DE 10026760
(43) Veröffentlichungstag der Anmeldung: 05.12.2001
(73) Patentinhaber: ROBERT BOSCH GMBH, 70442 Stuttgart (DE)
(72) Erfinder: Gehrke, Helmar-Steffen, 71735 Eberdingen-Hochdorf (DE); Guenther, Clemens, 76275 Ettlingen (DE)

(56) Entgegenhaltungen:
- EP-A- 0 911 750
- EP-A- 0 961 429
- EP-A2- 0 986 184
- WO-A-98/09848
- DE-A1- 4 208 528
- DE-A1- 4 302 015
- DE-A1- 19 804 476
- DE-A1- 19 953 855
- DE-U1- 9 109 141
- JP-A- 9 115 377

## Beschreibung

### STAND DER TECHNIK

Die vorliegende Erfindung betrifft Verfahren zur Zuordnung von Bedienfunktionen zu Bedienelementen einer elektronischen Vorrichtung, welche umschaltbar die Funktionen mehrerer elektronischer Geräte der Kraftfahrzeug-Komfortelektroniky ausüben kann, und eine entsprechende Vorrichtung.

Die vorliegende Erfindung sowie die ihr zugrunde liegende Problematikvin Bezug auf ein an Bord eines Automobils befindliches Bediensystem für an Bord des Automobils befindliche Komfortelektronik-Geräte erläutert.

Die Entwicklung elektronisch arbeitender Geräte an Bord eines Automobils ist rasant. Eine Vielzahl von Geräten läßt sich vom Fahrer entweder manuell oder teilweise automatisiert oder vollständig automatisiert bedienen. Als Beispiele seien genannt: eine Klimaanlage, eine Klimaautomatik, ein Heizsystem, ein Lüftungssystem, ein Tempomat, ein Navigationssystem, ein Autotelefon, ein Verkehrsinformationssystem, ein Fernsehgerät, ein Radiogerät, ein Kassettengerät, ein CD-Player, um nur einige solcher Geräte zu nennen.

Findet die Steuerung eines solchen Geräts automatisch statt, so muß sich der Fahrer nicht um Einzelheiten der Bedienung des Gerätes kümmern. Als Beispiel sei die Klimaautomatik genannt, bei der der Fahrer lediglich eine Temperaturvorgabe einstellt und die Klimaautomatik den Rest alleine erledigt, daß heißt die Klimaanlage so steuert, daß die vorgegebene Temperatur relativ schnell erreicht wird.

Die meisten Geräte allerdings lassen sich nicht vollständig automatisiert betreiben. Dies liegt in der Natur derjenigen Funktionen, die das Gerät erfüllt. So bietet beispielsweise ein Navigationssystem eine Vielzahl von nützlichen Funktionen, die nicht automatisch ablaufen können, sondern bei denen es sinnvoller ist, wenn sie gezielt vom Fahrer abgerufen werden. Als Beispiel sei genannt, die letzte Meldung des Fahrzeugnavigationssystems zu wiederholen, oder den nächsten Abbiegepunkt von einer momentan befahrenen Straße noch einmal akustisch anzusagen.

Je mehr technische Geräte einer sinnvollen Bedienung durch den Fahrer unterliegen, desto wichtiger ist es, dem Fahrer dabei "Denkarbeit" abzunehmen.

Die im Stand der Technik vorhandenen, beispielshalber oben genannten Geräte haben eine Vielzahl unterschiedlicher Bediensymbole auf bestimmten Tasten, Drehreglern, oder anderen Bedienelementen aufgedruckt, mit denen sie dem Fahrer die technische Funktion, die durch Betätigung des jeweiligen Schalters oder der jeweiligen Taste ausgeführt werden soll, klarzumachen. Die im Stand der Technik verwendeten DIN-Symbole werden nach dem Prinzip vergeben, die dahinterliegende technische Funktion durch ein möglichst allgemein, daß heißt international verständliches Symbol darzustellen. Diese Umsetzung - Repräsentation der technischen Funktion durch ein treffendes, allgemein verständliches Symbol - gelingt jedoch nur selten.

Die Folge davon ist, daß mit zunehmender Zahl von Geräten der Fahrer bei der Bedienung dieser Geräte schnell überfordert ist, weil er sich zu viele Symbole merken muß, was ihn durchaus daran hindern kann, seine ganze Aufmerksamkeit dem Verkehr zu widmen.

Die EP 0 925 989 A2 nimmt sich eines anderen Problems an, das jedoch mit der Vielzahl von Bediensymbolen aufgrund der Vielzahl der verschiedenen technischen Geräte zusammenhängt: es wird dort die sogenannte Softkey-Technik beschrieben: es gibt eine begrenzte Anzahl von Bedientasten innerhalb einer On-Board-Bedienkonsole, die zur Bedienung einer Vielzahl von technischen Geräten dient, wobei jedoch ein anderer Weg beschritten wird. Die dort vorgeschlagenen Bedientasten besitzen nämlich keine einheitliche, konstante Beschriftung, sondern deren Beschriftung ändert sich, je nachdem, welches Gerät gerade aktiv zum Bedienen geschaltet wird. Damit können zwar bestimmte Tasten oder Regler eingespart werden, der Verwirrung durch die Vielzahl an Symbolen ist jedoch kein Einhalt geboten.

Aus der EP 0961429 A2 ist ein Verfahren und eine Einrichtung zur Anzeige der einer Funktionstaste aktuell zugeordneten Funktion in einem Audiogerät in einem Kraftfahrzeug bekannt.

Aus der WO 98/09848 ist eine Multifunktionsbedieneinrichtung bekannt, bei der eine Vielzahl von Fahrzeugsystemen über mehrere Tasten gesteuert werden kann. Eine Funktionsweise der Tasten wird in einer Anzeige dargestellt.

Aus der DE 199 53 855 A1 ist eine Multifunktionsschaltvorrichtung bekannt, bei der in einem Anzeigemittel Bilder dargestellt werden, die die Geräte repräsentieren. In weiteren Anzeigeebenen ist es möglich, eine Mehrzahl von Funktionen eines ausgewählten Gerätes auf dem Anzeigemittel darzustellen. In einem CD-Anzeige-Modus werden dabei Steuerungssymbole für ein CD-Gerät dargestellt.

Aus der JP 09 115 377 A ist eine Vorrichtung zur Klimasteuerung eines Fahrzeugs bekannt. Zur Steuerung können unterschiedliche Symbole in einer Anzeige dargestellt werden.

Aus der EP 0 911 750 A2 ist eine Eingabevorrichtung zur Steuerung verschiedener Einrichtungen in einem Fahrzeug bekannt, bei der ein Lenkradbedienelement zur Cursorsteuerung in einem Bildschirm dient, über die verschiedene Funktionen des Fahrzeugs ausgewählt werden können.

Aus DE 91 09 141 ist ein Autoradio mit einem abnehmbaren Bedienteil bekannt. Geneinsame Tastenschalter sind für die Autoradiobedierung und für eine Telefon anwahl vorgeschen.

### VORTEILE DER ERFINDUNG

Das erfindungsgemäße Verfahren mit den Merkmalen des Anspruchs 1 und die entsprechende Vorrichtung gemäß Anspruch 2 weisen gegenüber den bekannten Lösungsansätzen den Vorteil auf, daß ein Bediener für eine Vielzahl von Geräten nicht immer wieder neue Symbole lernen muß.

Die der vorliegenden Erfindung zugrunde liegende Idee besteht darin, solche Bediensymbole zur Bedienung der wichtigsten Funktionen eines Gerätes zu verwenden, die praktisch Jedermann kennt. Dabei wird auch auf die Erkenntnis zurückgegriffen, daß tatsächlich viele technische Geräte sich durch wenige Grundfunktionen, die sich in der Bedienung kaum unterscheiden, sinnvoll bedient werden können, obwohl die Geräte selbst völlig verschiedener technischer Natur sind. Es werden also bestimmte, für einen vorbestimmten Gerätetyp sehr bekannte, und bestimmten Originalfunktionen dieses Typs gewidmete Bediensymbole auch für die Bedienung für sinnverwandte Funktionen bei völlig artfremden Geräten verwendet.

Dies bringt den Vorteil mit sich, daß sich technisch grundverschiedene Geräte praktisch einheitlich bedienen lassen, ohne neue Symbolik lernen zu müssen. Ein weiterer Vorteil besteht darin, daß, wenn die Anzahl der Tasten, die zur Bedienung im wesentlichen vorgeschlagen werden, nicht allzu hoch ist, beispielsweise fünf, dem Benutzer des Gerätes gleich die fünf wichtigsten Funktionen des Geräts vorgeschlagen werden, so daß die weniger wichtigen Funktionen des Geräts von den wichtigen Funktionen vom Bediensystem her getrennt sind. Dem Benutzer wird also die Denkarbeit abgenommen, zwischen wichtigen und "unwichtigen" im Sinne von gewisse Extras bildende Funktionen zu unterscheiden. Gerade im Hinblick auf die riesige technische Funktionsvielfalt mancher Geräte stellt dies einen erheblichen Vorteil dar.

Im Unteransprüch findet sich eine vorteilhafte Weiterbildung und Verbesserung des Gegenstandes der Erfindung.

Erfindungsgemäß stammen die verwendeten Bediensymbole aus dem Phono-Bereich, insbesondere von der Bedienung eines CD-Players: es werden das Play-Symbol, das Stop-Symbol, das Pause-Symbol, das Sprung-vorwärts-Symbol, Sprung-rückwärts-Symbol, sowie optional noch das Vorwärts-Symbol und das Rückwärts-Symbol verwendet.

Dabei wird dem Play-Symbol meist die Funktion 'Aktivieren des Geräts, so daß man etwas davon hat' zugeordnet, dem Stop-Symbol dessen Gegenteil, nämlich die Deaktivierung zugeordnet, dem Pausen-Symbol wird meist eine temporäre, leicht rückgängig zu machende Deaktivierung zugeordnet oder je nach technischem Gerät eine spezifische andere Funktion.

Das Sprung-vorwärts-Symbol sowie dessen Gegenteil, das Sprung-rückwärts-Symbol, kann beispielsweise zur Anwahl des nächsten Senders bei einem Fernsehgerät oder einem Radio beziehungsweise für die Anwahl des vorherigen Senders verwendet werden. Bei der Steuerung eines CD-Players bezieht sich das Symbol auf den nächsten beziehungsweise vorherigen Titel. Bei der Steuerung eines Verkehrsinformationssystems könnten sich jedoch die beiden vorerwähnten Symbole auf die vorherige Verkehrsmeldung beziehungsweise auf die nächste Verkehrsmeldung beziehen. Dies nutzt die Tatsache aus, daß viele wesentlichen Informationen tatsächlich seriell dem Benutzer präsentiert werden. Bei einem Fahrzeugnavigationssystem kann beispielsweise mit der Sprung-rückwärts-Taste die letzte Meldung wiederholt werden und mit der Sprung-vorwärts-Taste der nächste Abbiegepunkt noch einmal akustisch angesagt werden. Bei einem Tempomaten kann mit der Sprung-vorwärts-Taste die Vorgabegeschwindigkeit erhöht und mit der Sprung-rückwärts-Taste das Gegenteil, nämlich die Geschwindigkeit verringert werden.

Wie aus diesen relativ willkürlich herausgegriffenen Beispielen bereits ersichtlich wird, eignet sich diese Grundauswahl an Bediensymbolen bereits sehr gut dafür, die wichtigsten Bedienfunktionen eines Geräts zu realisieren. Dies liegt am prägnanten Charakter des Symbols und der leichten Identifizierung mit der zugehörigen Grundfunktion: Ein/Aus / kurz Aus / irgendetwas verringern / irgendetwas erhöhen.

Die vorliegende Erfindung kann auch in einer Bedienkonsole zur Bedienung der vorerwähnten Vielzahl von Geräten verkörpert sein, wobei sie, wenn sie als separat angebrachte Bedienkonsole ausgebildet ist, vorzugsweise einen Auswahlschalter zur Auswahl eines bestimmten Geräts, ein Display zur Darstellung des gerade ausgewählten Geräts sowie die vorerwähnten Tasten enthält. Eine solche Bedienkonsole kann dann vorzugsweise an einem ergonomisch gut erreichbaren Punkt, beispielsweise in der Mittelkonsole angebracht werden.

Gemäß einer weiteren bevorzugten Weiterbildung dieser Bedienkonsole können jedoch auch einzelne Teile davon in ein Lenkrad eines Kraftfahrzeugs integriert sein. Dafür eignen sich beispielsweise der oben erwähnte Auswahlschalter sowie die mit den universellen Symbolen gekennzeichneten Tasten. Das Display kann zwar auch im Lenkrad untergebracht werden, jedoch empfiehlt sich aus Gründen der Fahrsicherheit, das Display weiter oben im Blickfeld des Fahrers anzubringen, um seinen Blick nicht zu sehr von der Straße abzulenken.

Grundsätzlich gilt für das hier vorliegende, erfinderische Konzept, daß es insofern beliebig erweiterbar ist, als daß eine bestimmte, begrenzte Anzahl von zusätzlichen Tasten zur Verfügung gestellt werden, die jedoch vorzugsweise für den Fahrer erkennbar separat erscheinen, um weitere Spezialfunktionen verschiedener Geräte bedienbar zu machen, ohne die Einfachheit des vorliegenden Konzepts zu beeinträchtigen. Dabei können solche Zusatztasten entweder an der vorerwähnten Bedienkonsole vorhanden sein oder alternativ beziehungsweise redundant dazu auch an dem Gerät selbst, sofern es für eine Bedienung dem Fahrer zugänglich ist.

### ZEICHNUNGEN

Ausführungsbeispiele der Erfindung sind in den Zeichnungen dargestellt und in der nachfolgenden Beschreibung näher erläutert.

Es zeigen:
- Fig. 1: eine Grundversion einer Bedienkonsole mit der allgemeinen Bedeutung der fünf dargestellten Tasten;
- Fig. 2 bis Fig. 10: die in Fig. 1 neutral dargestellte Bedienkonsole beim Einsatz zur Bedienung von neun verschiedenen, in einem Automobil vorkommenden Geräten sowie die jeweilige, gerätespezifische Bedeutung der Tasten; und
- Fig. 11: eine mögliche Lenkradbelegung mit Tasten zur Geräteauswahl sowie die oben erwähnten fünf Bedientasten.

### BESCHREIBUNG DER AUSFÜHRUNGSBEISPIELE

In den Figuren bezeichnen gleiche Bezugszeichen gleiche oder funktionsgleiche Komponenten.

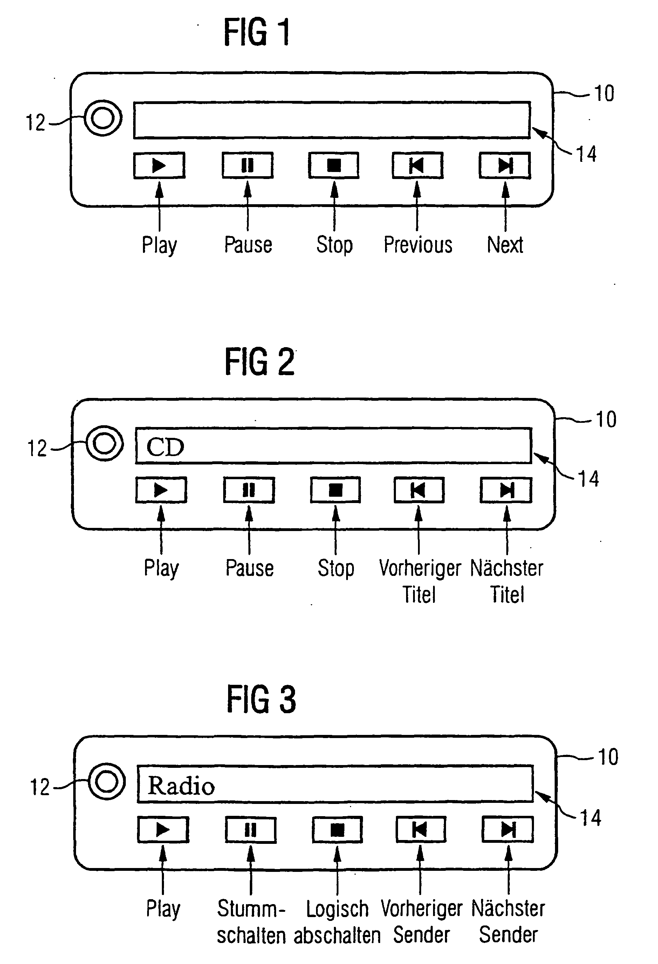

Fig. 1 zeigt eine Grundversion einer Bedienkonsole mit der allgemeinen Bedeutung der fünf dargestellten Tasten.

Die in Fig. 1 gezeigte Bedienkonsole ist ein separates, selbständiges kleines Gerät, etwa mit den Abmessungen der Vorderfront, wie sie bei einem CD-Player anzutreffen ist. Links eingezeichnet ist ein Drehknopf, der als Drehschalter wirkt, und je nach eingelegter Drehstellung verschiedene technische Geräte für eine Steuerung aktiviert, daß heißt auswählt. In einer bestimmten, festen Stellung des Drehschalters, kann also immer nur ein Gerät gesteuert werden.

Sich nach rechts neben dem Drehknopf erstreckend ist ein alphanumerisches Display 14 vorgesehen. Dies zeigt das aktuell ausgewählte Gerät als Text an und optional weitere, vom Bedienkontext her relevante Angaben. Wenn das Radio gerade gesteuert wird, könnten also zusätzlich noch der derzeit eingestellte Sendername oder/und dessen Frequenz je nach verfügbarem Display-Umfang dargestellt werden. Weiter kann auch ein Hinweis-Symbol dargestellt sein, das auf die Existenz weiterer Bedienfunktionen hinweist, die mit den oben erwähnten separaten Bedientasten, die nicht in der in Fig. 1 bis Fig. 11 gezeigten Bedienkonsolen auftauchen, gesteuert werden können.

Des weiteren sind in einer Reihe die oben erwähnten fünf Tasten zur Darstellung der jeweiligen technischen Grundfunktionen der einzelnen technischen Geräte dargestellt. Vorzugsweise werden als Grundmenge das Play-Symbol, ganz links als Dreieck, das mit einer Spitze nach rechts zeigt, verwendet, des weiteren das Pause-Symbol, zweites von links, das zwei parallele, senkrechte Striche anzeigt, des weiteren das Stop-Symbol, Mitte, das im wesentlichen durch die Darstellung eines Quadrats erreicht wird, das mit oder ohne Flächenfüllung vorhanden sein kann, sowie das 'Previous'- oder Sprung-rückwärts Symbol, zweites von rechts, das aus einem senkrechten Strich mit angeschlossenem waagerechten Strich und einem Dreieck nach links besteht, sowie das 'Next- oder Sprung-vorwärts- Symbol', ganz rechts, das spiegelbildlich zum Previous-Symbol nach rechts zeigt, verwendet.

Fig. 2 zeigt die in Fig. 1 dargestellte Bedienkonsole, wenn der Drehschalter 12 so eingestellt ist, daß das im Automobil befindliche CD-Abspielgerät aktiv steuerbar ist. In diesem Fall sind die Bedeutungen der Tastensymbole so, wie sie jeder kennt. Von links nach rechts: Play, Pause, Stop, vorherigen Titel, nächsten Titel der eingelegten CD anspielen.

In Fig. 3 ist die Steuerung eines Radios dargestellt. Von links nach rechts gesehen können vorzugsweise folgende Funktionen abgedeckt werden: Play, Stummschalten, logisch Abschalten, vorheriger Sender, nächster Sender.

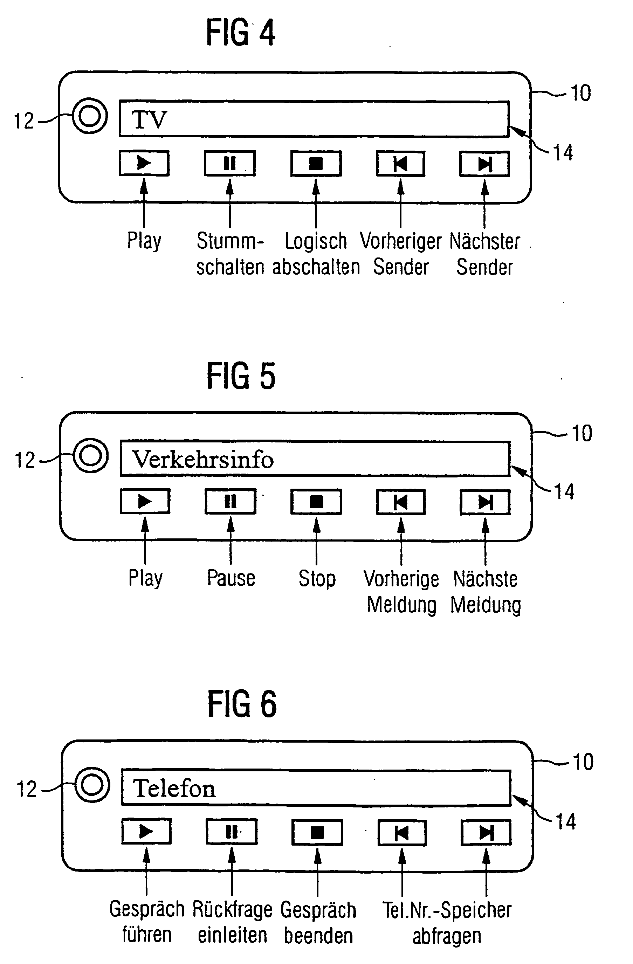

In Fig. 4 können die entsprechenden Funktionen für ein Fernsehgerät gesteuert werden.

In Fig. 5 ist die Steuerung eines Verkehrsinformationssystems dargestellt. Hier können von links nach rechts folgende Funktionen gesteuert werden: Play, Pause, Stop, Anzeige oder Ansage der vorherigen Meldung, sowie Anzeige oder Ansage der nächsten Meldung, wenn davon ausgegangen werden kann, daß eine bestimmte, vorgegebene Reihe an Verkehrsinformationsmeldungen im Speicher des Systems vorliegt.

In Fig. 6 ist die Steuerung eines Telefons gezeigt. Hier kann die Play-Taste betätigt werden, um ein Gespräch zu führen, daß heißt eine vorgegebene Telefonnummer anzuwählen. Die Telefonnummer kann dabei in einem Telefonnummernspeicher vorhanden sein, der mit den rechts liegenden Sprung-vorwärts- oder Sprung-rückwärts-Tasten abgefragt werden kann.

Eine Telefonnummer könnte beispielsweise durch ein anderes, bereits im Automobil befindliches Zifferneingabegerät eingebbar sein, wenn es eine entsprechende logische und physikalische Verbindung mit der hier vorgeschlagenen Bedienkonsole besitzt. Alternativ könnte auch ein Anschluß zu einem Mobiltelefon vorhanden sein, das dann seinerseits als Basis zur Eingabe einer Telefonnummer dienen kann.

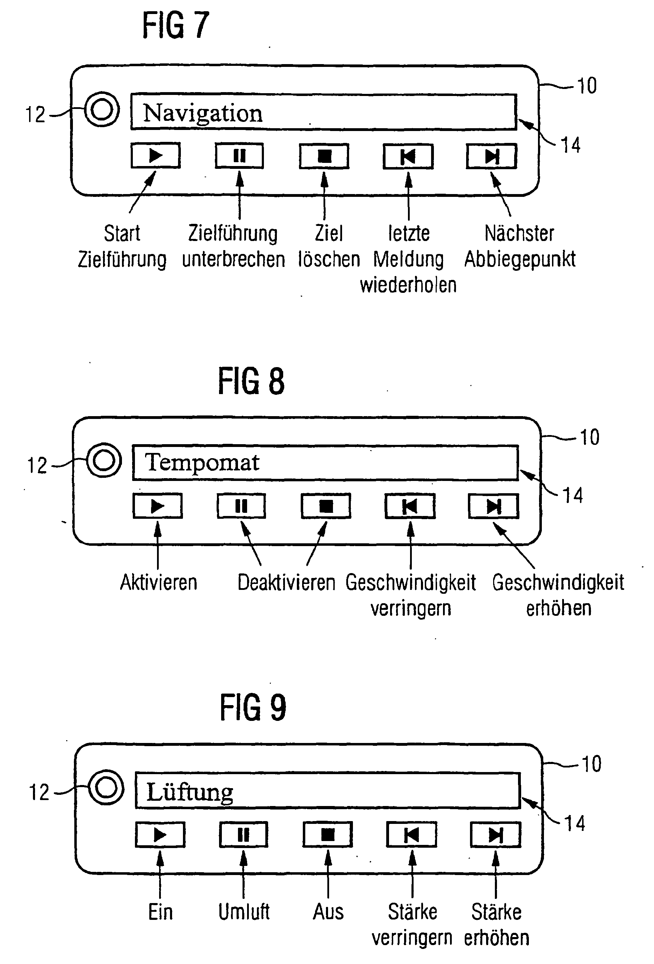

In Fig. 7 ist die Steuerung eines Navigationssystems gezeigt. Hier bestehen die wichtigsten Grundfunktionen im Starten der Zielführung, das mit der Play-Taste gesteuert wird. Die Pause-Taste dient vorzugsweise dazu, um die Zielführung temporär zu unterbrechen. Die Stop-Taste dient dazu, um ein vorgegebenes Ziel wieder zu löschen. Die Sprung-rückwärts-Taste kann vorzugsweise dazu dienen, die letzte vom Navigationssystem herausgegebene Meldung zu wiederholen, und die Sprung-vorwärts-Taste kann vorzugsweise dazu dienen, den nächsten Abbiegepunkt von der derzeit befahrenen Straße anzusagen oder anzuzeigen, oder beides.

In Fig. 8 ist die Steuerung eines Tempomats dargestellt. Hier dient die Play-Taste zur Aktivierung des Tempomats, die Pause-Taste zur Deaktivierung, ebenso die Stop-Taste. Die Sprung-rückwärts-Taste dient dazu, eine geringere Vorgabegeschwindigkeit einzustellen und die Sprung-vorwärts-Taste dient dem Gegenteil, nämlich eine höhere Vorgabegeschwindigkeit einzustellen.

In Fig. 9 ist die Steuerung eines Lüftungssystems dargestellt. Die Play-Taste dient zum Einschalten, die Pause-Taste zur temporären Umluftschaltung, daß heißt einer reinen Innenzirkulation im Automobil, die Stop-Taste dient dem Ausstellen, und die Sprung-rückwärts-Taste dient der Verringerung der Ventilatorleistung. Die Sprung-vorwärts-Taste dient der Verstärkung der Ventilatorleistung.

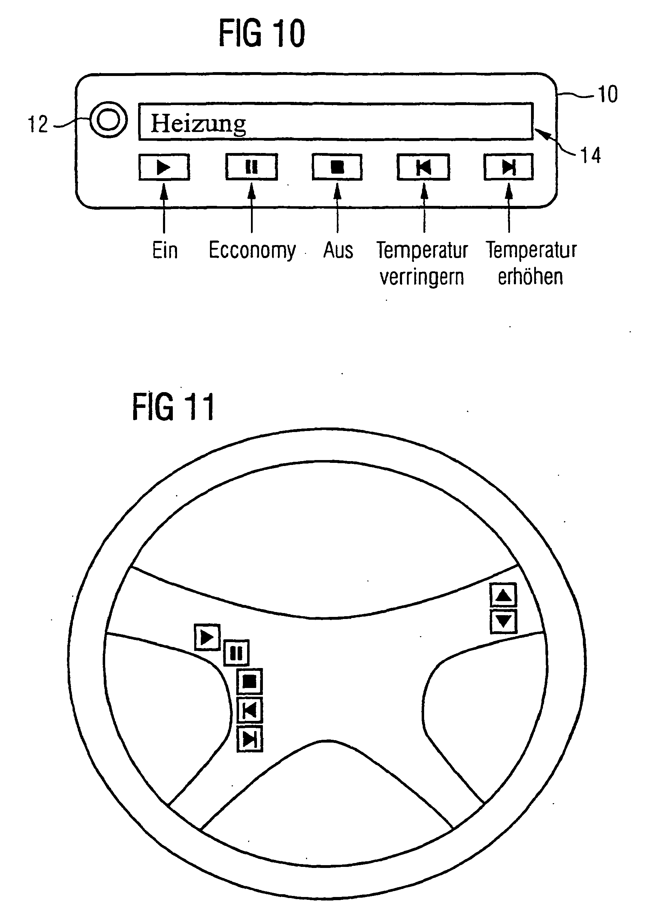

In Fig. 10 ist die Steuerung einer Heizung gezeigt. Die Play-Taste dient dem Einschalten des Heizsystems, die Pause-Taste kann einer 'Economy'-Funktion dienen, die Stop-Taste dient dem Ausstellen, die Sprung-rückwärts-Taste dient dazu, eine geringere Temperatur zu erreichen und die Sprung-vorwärts-Taste dient dazu, eine höhere Temperatur zu erreichen. Auf die selbe Art und Weise könnte auch eine Klimaautomatik gesteuert werden, wobei die Sprung-vorwärts- und Sprung-rückwärts-Tasten mit verschiedenen, dann am Display dargestellten Temperaturzahlen verbunden sind.

Fig. 11 zeigt eine mögliche Lenkradbelegung mit Tasten zur Geräteauswahl sowie die oben erwähnten fünf Bedientasten.

Das abgebildete Lenkrad zeigt in der sich nach rechts erstreckenden dicken Lenkradspeiche zwei Drücktasten, die die Funktion des Drehknopfs 12 in Fig. 1 übernehmen. Durch Drücken der Pfeiltaste kann somit der jeweilige Menüpunkt im dahinter liegenden Auswahlmenü angesprungen werden. Vorzugsweise ist dieses dahinter liegende Menü auch rulierend dargestellt, so daß ein fortwährendes Drücken einer der beiden Pfeiltasten irgendwann wieder zur Auswahl einer bereits angesprungenen Menüfunktion führen würde.

Im linken Bereich des Lenkrads sind die vorerwähnten fünf Tasten nebeneinander angeordnet dargestellt. Es versteht sich von selbst, daß die geometrische Form der Anordnung auch anders vorgenommen werden kann, so daß eine alternative, ergonomisch günstige Bedienung durch den Fahrer erfolgen kann. Sinnvoll und damit bevorzugt erscheint es jedoch, die Auswahltasten 12' mit der einen Hand und die eigentlichen Bedientasten mit der anderen Hand zu betätigen.

Obwohl die vorliegende Erfindung anhand eines bevorzugten Ausführungsbeispiels vorstehend beschrieben wurde, ist sie darauf nicht beschränkt, sondern auf vielfältige Weise modifizierbar.

Das vorgeschlagene erfinderische Konzept kann beispielsweise durch Integration einer oder einer geringen Anzahl weiterer Tasten sinnvoll erweitert werden. Auch könnten die Tastensymbole 'Doppelpfeil-rechts' oder 'Doppelpfeillinks', die bekannterweise zum schnellen Vorspulen oder schnellen Zurückspulen bei einem Kassettenrekorder dienen, in das erfinderische Bedienkonzept integriert werden, sofern es die technischen Funktionen eines oder mehrerer der zu steuernder Geräte sinnvoll erscheinen lassen. Dabei wird der Vorteil ausgenutzt, daß diese Tastensymbole ebenfalls einen überragenden Bekanntheitsgrad besitzen.

Es versteht sich von selbst, daß auch weitere, aus anderen Bereichen stammende Symbole verwendet werden können, um in dem vorgeschlagenen Bedienkonzept das eine oder andere Tastensymbol zu ersetzen. Dafür kommen beispielsweise das Plus-Symbol, das Minus-Symbol, der Kreis in seiner Bedeutung als Null oder Neutralelement hinzu.

Ebenso könnte das Bedienkonzept durch YES-Tasten oder NO-Tasten sinnvoll erweitert werden, wenn die Bedienerführung eines Geräts so kompliziert ist, daß es sinnvoll erscheint, am Display bestimmte Fragen programmgesteuert auszugeben, die der Benutzer dann durch Drücken einer der vorgenannten Yes-/No-Tasten beantworten kann und das Gerät in entsprechender Weise bedient.

## Patentansprüche

1. Verfahren zur Zuordnung von Bedienfunktionen zu Bedienelementen einer elektronischen Vorrichtung, welche umschaltbar die Funktionen mehrerer elektronischer Geräte der Kraftfahrzeug-Komfortelektronik, ausüben kann, wobei die Gerätetypen mindestens ein Radiogerät und einen der folgenden Typen umfassen: entweder Navigationssystem oder Lüftungssystem oder Heizungssystem oder Klimaanlage
mit den Schritten:
Bereitstellen einer vorbestimmten Anzahl von Bedienelementen, welche für jeweilige Bedienfunktionen eines ersten Gerätetyps zugeordnet sind,
Zuordnen jeweiliger Bedienfunktionen jedes weiteren Gerätetyps zu den Bedienelementen und
Umschalten der Vorrichtung zwischen verschiedenen Gerätetypen, wobei die Bedienfunktionen der Bedienelemente entsprechend der Zuordnungen geändert werden,
wobei wenigstens die folgenden Symbole aus dem Phonobereich zur Kennzeichnung der Bedienelemente verwendet werden:
Play-Symbol, Stopp-Symbol, Pause-Symbol, Sprung-vorwärts-Symbol, Sprung-rückwärts-Symbol.
wobei jedes der Symbole auf jeweils einem der Bedienelemente vorgesehen wird und wobei die Kennzeichnung für eine Bedienung aller Gerätetypen der elektronischen Vorrichtung verwendet wird.

2. Vorrichtung zur Durchführung des Verfahrens nach Anspruch 1 mit:
einer Umschalteinrichtung (12) zum Umschalten der Vorrichtung zwischen verschiedenen Gerätetypen, wobei die Vorrichtung umschaltbar die Funktionen mehrerer elektronischer Geräte der Kraftfahrzeug-Komfortelektronik ausüben kann, wobei die Gerätetypen mindestens ein Radiogerät und einen der folgenden Typen umfassen: entweder Navigationssystem oder Lüftungssystem oder Heizungssystem oder Klimaanlage,
einer Zuordnungsänderungseinrichtung zum Ändern der Bedienfunktionen der Bedienelemente entsprechend der Zuordnungen geändert;
einem Display (14) zur Anzeige des Gerätetyps und entsprechender Bedienfunktionsparameter und
den Bedienelementen in Form von Tasten,
wobei wenigstens die folgenden Symbole aus dem Phonobereich zur Kennzeichnung der Bedlenelemente verwendet werden:
Play-Symbol, Stopp-Symbol, Pause-Symbol, Sprung-vorwärts-Symbol, Sprung-rückwärts-Symbol,
wobei jedes der Symbole auf jeweils einer Taste vorgesehen ist und wobei die Kennzeichnung für eine Bedienung aller Gerätetypen der elektronischen Vorrichtung vorgesehen ist.

3. Vorrichtung nach Anspruch 2, **dadurch gekennzeichnet, dass** die Bedienelemente an einem Lenkrad eines Kraftfahrezugs angeordnet sind.

## Claims

1. Method for associating operator control functions with operator control elements of an electronic apparatus which can be changed over to perform the functions of a plurality of electronic appliances in motor-vehicle added-convenience electronics, wherein the appliance types comprise at least one radio and one of the following types: either a navigation system or a ventilation system or a heating system or an air-conditioning installation,
having the following steps:
a predetermined number of operator control elements which are associated with respective operator control functions of a first appliance type is provided,
respective operator control functions of each further appliance type are associated with the operator control elements, and
the apparatus is changed over between different appliance types, wherein the operator control functions of the operator control elements are changed in accordance with the associations,
wherein at least the following symbols from the phono domain are used to denote the operator control elements:
play symbol, stop symbol, pause symbol, skip forward symbol, skip back symbol,
wherein each of the symbols is provided on a respective one of the operator control elements and wherein the denotation is used for operator control of all appliance types of the electronic apparatus.

2. Apparatus for carrying out the method according to Claim 1, having:
a changeover device (12) for changing over the apparatus between different appliance types, wherein the apparatus can be changed over to perform the functions of a plurality of electronic appliances in motor-vehicle added-convenience electronics, wherein the appliance types comprise at least one radio and one of the following types: either a navigation system or a ventilation system or a heating system or an air-conditioning installation,
an association changing device for changing the operator control functions of the operator control elements in accordance with the associations;
a display (14) for indicating the appliance type and appropriate operator control function parameters, and the operator control elements in the form of keys,
wherein at least the following symbols from the phono domain are used for denoting the operator control elements:
play symbol, stop symbol, pause symbol, skip forward symbol, skip back symbol,
wherein each of the symbols is provided on a respective key and wherein the denotation is provided for operator control of all appliance types of the electronic apparatus.

3. Apparatus according to Claim 2, **characterized in that** the operator control elements are arranged on a steering wheel of a motor vehicle.

## Revendications

1. Procédé d'affectation de fonctions de commande à des éléments de commande d'un dispositif électronique, lequel peut exercer de manière permutable les fonctions de plusieurs appareils électroniques de l'équipement électronique de confort d'un véhicule automobile, les types d'appareil comprenant au moins un appareil radio et l'un des types suivants : soit un système de navigation, soit un système de ventilation, soit un système de chauffage, soit un climatiseur, comprenant les étapes suivantes :
mise à disposition d'un nombre prédéfini d'éléments de commande qui sont affectés aux fonctions de commande respectives d'un premier type d'appareil,
affectation des fonctions de commande respectives de chaque type d'appareil supplémentaire aux éléments de commande et
permutation du dispositif entre les différents types d'appareil, les fonctions de commande des éléments de commande étant modifiées en fonction des affectations,
au moins les symboles suivants du secteur de la phonographie étant utilisés pour l'identification des éléments de commande :
symbole de lecture, symbole de stop, symbole de pause, symbole d'avance rapide, symbole de rembobinage,
chacun des symboles étant prévu à chaque fois sur l'un des éléments de commande et l'identification étant utilisée pour une commande de tous les types d'appareil du dispositif électronique.

2. Dispositif pour mettre en oeuvre le procédé selon la revendication 1, comprenant :
un dispositif de permutation (12) pour permuter le dispositif entre différents types d'appareil, le dispositif pouvant exercer de manière permutable les fonctions de plusieurs appareils électroniques de l'équipement électronique de confort d'un véhicule automobile, les types d'appareil comprenant au moins un appareil radio et l'un des types suivants : soit un système de navigation, soit un système de ventilation, soit un système de chauffage, soit un climatiseur,
un dispositif de modification de l'affectation pour modifier les fonctions de commande des éléments de commande conformément aux affectations modifiées ;
un afficheur (14) pour afficher le type d'appareil et des paramètres de fonction de commande correspondants et
les éléments de commande sous la forme de touches,
au moins les symboles suivants du secteur de la phonographie étant utilisés pour l'identification des éléments de commande :
symbole de lecture, symbole de stop, symbole de pause, symbole d'avance rapide, symbole de rembobinage,
chacun des symboles étant prévu à chaque fois sur une touche et l'identification étant utilisée pour une commande de tous les types d'appareil du dispositif électronique.

3. Dispositif selon la revendication 2, **caractérisé en ce que** les éléments de commande sont disposés sur un volant de direction d'un véhicule automobile.
